# EUROPEAN PATENT SPECIFICATION

(11) **EP 2 080 672 B1**
(45) Date of publication and mention of the grant of the patent: **03.10.2012**
(21) Application number: 08460003.0
(22) Date of filing: 20.01.2008
(51) Int. Cl.: B60R 11/02, H04M 1/06

(54) **A mobile phone holder with lateral connections, especially for a vehicle**
Mobiltelefonhalter mit seitlichen Anschlüssen, insbesondere für ein Fahrzeug
Support de téléphone mobile doté de connexions latérales, en particulier pour un véhicule

(43) Date of publication of application: 22.07.2009
(73) Proprietor: BURY Sp. z o.o., 39-300 Mielec (PL)
(72) Inventor: Bury, Henryk, 39-300 Mielec (PL)
(74) Representative: Kaminski, Zbigniew

(56) References cited:
- EP-A- 1 835 706
- DE-A1-102006 005 111
- DE-U1- 29 705 230
- US-A- 6 019 624

## Description

This invention relates to a mobile phone holder provided with a lateral power connection and, if applicable, with lateral signal connections, and used in mechanical vehicles. The holder is provided with a base, a cover and a slide, which is mounted slidably in the base and into which a mobile phone is insertable. The holder is further provided with an unlocking module with lateral buttons, which are connected to an eccentric wheel coupling the lateral buttons, and which, when pressed, unlock the mobile phone.

At the turn of the 21^{st} century mobile phones with various power and signal connections, located on the lateral surfaces of the phone, are increasingly used. This arrangements results from the pursue to offer miniaturized phones and to use all available surface of the phone.

PCT patent application WO 9811747 describes a mobile phone holder, which body is provided with a cavity in its lower part adapted to accommodate a mobile phone, whereas in the upper part of the body there is a spring-activated catch provided with a rotatably mounted locking bar, which is pressed by the mobile phone and, forced by the spring, catches the upper part of the phone pressing it down to the surface of the cavity in the holder.

The most commonly used phone holders have power and signal connections in the lower part and the connection with a corresponding socket of a mobile phone is achieved automatically once the phone is inserted into the cavity of the holder where the connections are located.

European patent application EP 1 112 893 A1 describes a mobile phone holder, which is provided not only with a signal connection in the lower part but also with an antenna plug, which is located in the upper part of the holder and enters the corresponding socket of the mobile phone while the phone is inserted into the holder.

German utility model DE 201 06 566 U1 describes a mobile phone holder, which - in its lower part - is provided with a cavity locating the phone. The cavity has signal and power plug connectors and, in its upper part, a slide, which presses the mobile phone towards the cavity and protects it from falling out. To release the slide in order to remove the phone, it is necessary to press the button on its front surface to release the lock. The slide may also be used to adjust the holder to the length of the mobile phone to be inserted.

German utility model DE 297 05 230 U1 describes a mobile phone holder, in the lower part of which there is a cavity to locate the phone, while in the upper part of which there is a spring-activated catch to protect the phone from falling out. In the lower part of the holder there is an elastic antenna plug, which is directed perpendicularly to the bottom of the mobile phone and which enters into the antenna socket in the lower part of the mobile phone automatically when the phone is inserted into the holder. The catch in the upper part of the holder consists of many small parts and is released when the button, located in the middle part of the catch, is pressed. However, this design does not ensure firm mounting and increases the production costs of the holder.

Generic German document DE 10 2006 005 111 A1 describes a mobile phone holder, which lower cavity is provided with a signal connection and a power connection and a phone is locked in the holder by means of a sliding element, located slideably in the casing comprising a base and a cover. The phone is mounted in the sliding element. For this purpose the lower part of the sliding element is provided with a cavity to accommodate a mobile phone, whereas the upper part has an elastic catch, which mounts the mobile phone when it is inserted into the holder. Once the sliding element is moved and the phone is mounted, the phone is locked in its "moved" position by means of an additional locking mechanism. The locking mechanism can be released by pressing a lateral button of an unlocking module in the holder. Additionally, the holder is also provided with an electronic module, which enables cooperation with a hands-free kit installed in the mechanical vehicle.

Recently, mobile phones provided with a power socket on its lateral side. The holders for these phones are provided with a power cable with a plug, which is inserted into the socket manually upon the phone is mounted in the holder.

The object of this invention is to provide a mobile phone holder for mechanical vehicles, which enables an automatic connection between the power sockets and/or signal sockets on a lateral side of the phone and the corresponding plugs of the phone when it is inserted into the holder.

In accordance with the invention there is provided a mobile phone holder for a vehicle, which is characterized in that the slide of the holder is provided with a power plug, mounted slideably in it, the slide having a casing and a first and second pins, A first guide is provided in the base and guiding the first pin, and a second guide is provided in the cover and guiding the second pin. The first and second pins being inclined towards the longitudinal axis of the holder. The first pin being further guided along a third guide of a flat protrusion of the holder, the protrusion being perpendicular to the holder longitudinal axis, thus making the power plug move perpendicularly to the longitudinal axis of the holder.

Favourably, the casing of the power plug is also a casing of the signal plugs, which are adapted to engage with corresponding sockets on the lateral side of the mobile phone.

The slide is preferably provided with an insert, which is mounted in the slide and slidably in the longitudinal direction of the holder. The insert has supports with a catch rotatably mounted thereto. The catch is provided with a spring and is adapted to holds the upper edge of a mobile phone.

The catch is favourably provided with a blocking protrusions, which are adapted to engage with guides in the protrusion of the body of the unlocking module and to blocks the catch when the slide is in its lowest position.

The protrusion of the body of the unlocking module is favourably preferably provided with a slot, in which a guide pin, mounted slideably in the hole of the plate of the slide, is guided perpendicularly to the surface of the plate and is adapted to releases the protrusion of the body of the unlocking module when the phone is inserted, thus allowing the motion of the slide to its lowest position.

The unlocking module has advantageously a body, which expanded arms are also the guides for the slide.

Preferably, the cover is provided in its lateral part with a guide inclined to the axis of the holder analogously to the guide of the base and adapted to guide the pin of the power plug casing. adapted to guide the pin of the casing of the power plug.

Advantageously, the slide is provided on its plate with an antenna plug.

The performance tests of the mobile phone holder for mechanical vehicles, according to the invention, proved that thanks to its design it allows mounting the mobile phones provided with power sockets and, if applicable, with signal sockets on the lateral side and the mobile phones provided with power sockets on the lateral side, signal sockets on the bottom side and an antenna socket on the rear side. It was also proved that the holder ensures a firm mounting and a correct connection between the phone and electronic or electric devices of the mechanical vehicle.

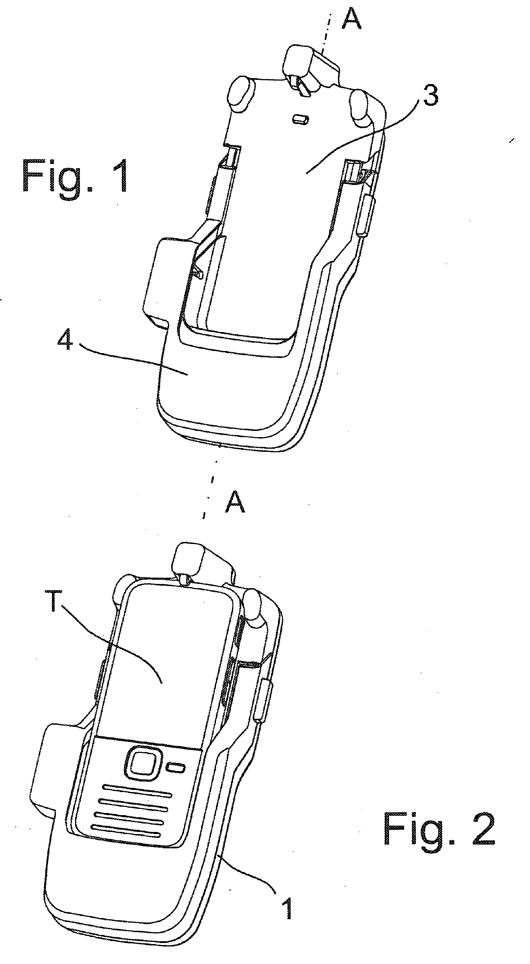

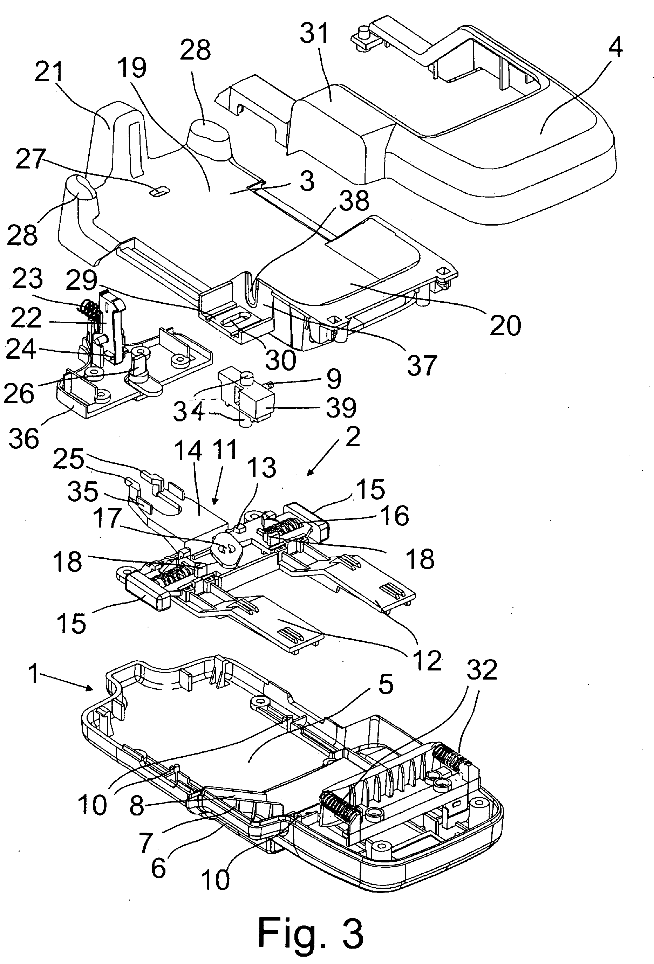

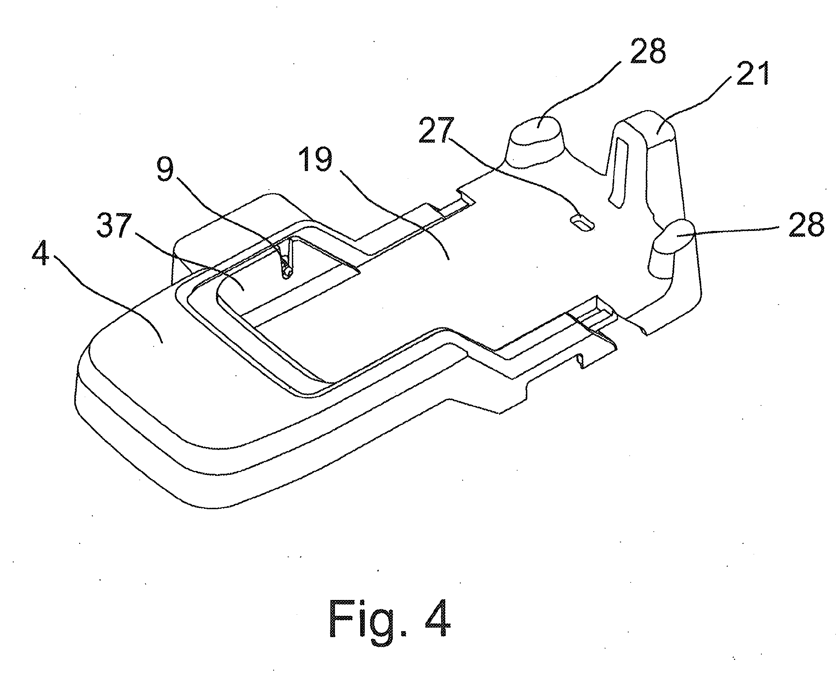

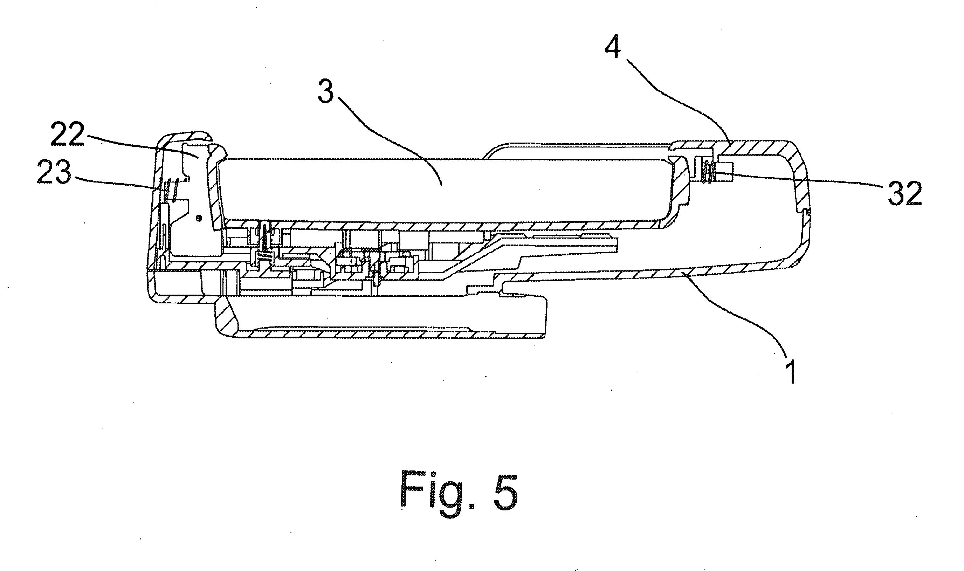

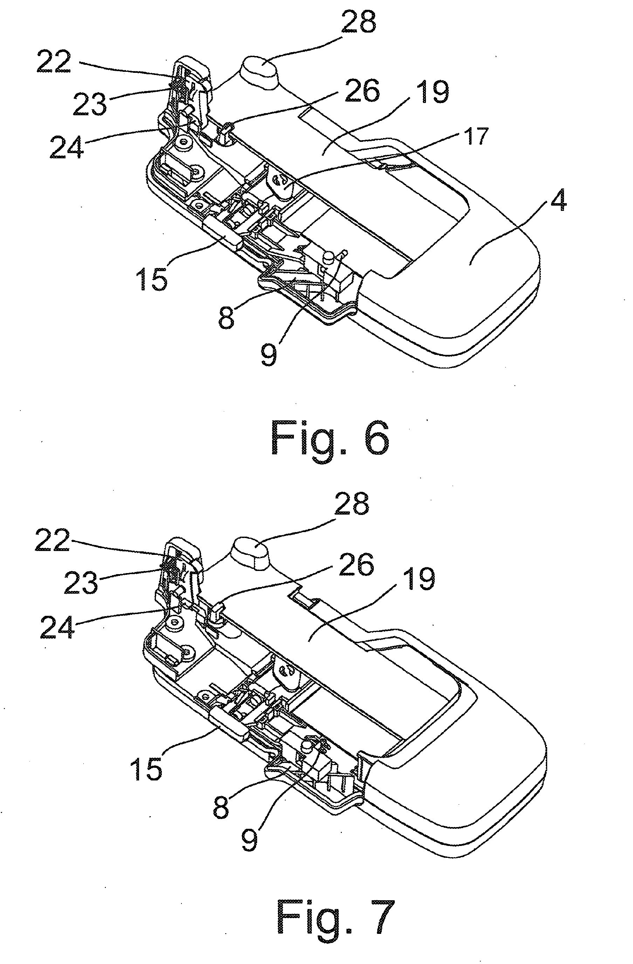

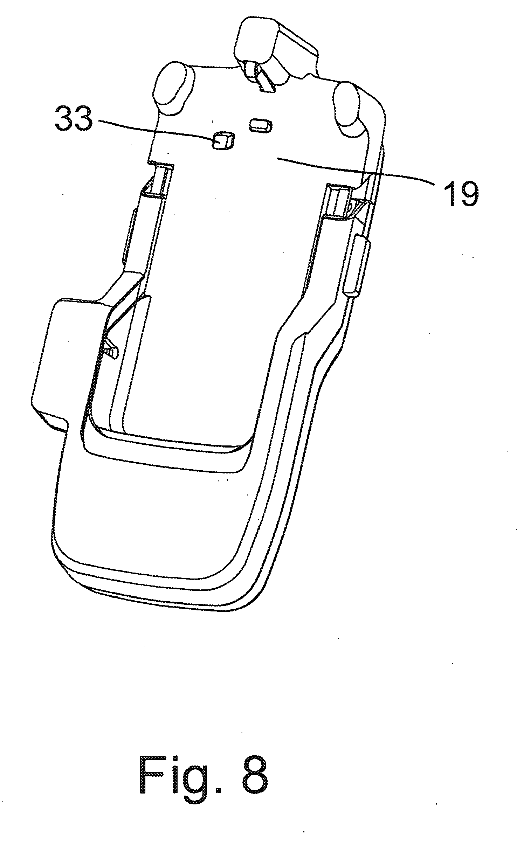

The mobile phone holder for a mechanical vehicle, according to the invention, is presented, by way of the example only, on the drawings, where: Fig. 1 is a perspective view of the holder mounted within a mechanical vehicle; Fig. 2 is a perspective view of the holder, according to the Fig. 1, with a mobile phone in it, provided with power sockets on its left lateral side; Fig. 3 is an exploded view of the components of the holder, according to the Fig. 1; Fig. 4 is a perspective view of the slide of the holder with a cover; Fig. 5 is an axial section of the holder, according to the Fig. 1, along the A-A axis; Fig. 6 is a perspective view of an axial section of the holder, according to the Fig. 1, with the cover and the slide removed; Fig. 7 is a perspective view of an axial section of the holder, according to the Fig. 1, in a released position; Fig. 8 is a perspective view of the holder provided with an additional antenna plug located on the slide.

In the embodiment depicted, by way of the example only, in the Figures the holder is designed for a mobile phone, in which the signal is transferred from the holder to a hands-free kit via a wireless connection (BLUETOOTH), especially to a mobile phone T provided with a power socket and, possibly, with a signal socket located on the lateral surface of the phone. The mobile phone holder, according to the invention, consists of the following key components: a base 1, a slide 3, a module 2 unlocking the slide and a cover 4 (Figs. 1 to 3).

The base 1 of the holder consists of a lower plate 5, which edges protrude upwards and which lower part is connected with a mounting element 6 to mount the holder on a rack within a mechanical vehicle. On the lower plate 5 there is an electronic module installed, not depicted in the drawing, which is adapted to provide a connection between the holder and electronic or electric devices within a vehicle. On one side of the base 1 there is provided a protrusion 7, which is also the edge of the base 1, with a guide 8 inclined to the A-A axis at an acute angle and adapted to guide the casing 39 of the power plug 9 and, if applicable, a signal plug, which is not depicted in the drawing.

On the base 1 there is provided an unlocking button-type module 2, which is firmly mounted and which is located by the pins 10 in the base 1. This module consists of a body 11, which has a shape of two arms 12, connected with a cross bar 13 provided with a protrusion 14 and two buttons 15, which are mounted slideably and perpendicularly to the holder axis and which are provided with springs 16, and which are connected to each other eccentrically by means of a wheel 17. The arms 12 of the body 11, directed upwards, are the guides, along which the slide 3 moves. The buttons 15 are provided with teeth 18, which are adapted to engage with the corresponding catches of the slide 3, resulting in the slide being blocked when the catches are drawn aside. Move of the teeth towards the A-A axis of the holder, caused by pressing the buttons 15, results in releasing the slide 3 and allowing its move in relation to the holder, upwards or downwards, along the arms 12 of the unlocking module 2. Releasing the buttons 15 results in their return, pushed by the springs 16, to the position of protruding from the holder.

The slide 3 has a shape of a plate 19, which is provided in its lower part with a cavity 20, where the mobile phone can be placed, whereas in it upper part there is provided a protrusion 21, inside which there is a catch 22, mounted rotatably in an insert 36 located under the plate and having a form of a plate with supports. The rotatably mounted catch 22 is pressed down by means of a spring 23 to the upper edge of the mobile phone.

The catch 22 is provided with lateral protrusions 24, which are adapted to engage with guides 25, located at the end of the protrusion 14 of the unlocking module 2 and designed to block the catch 22 in a position where the mobile phone T is locked.

The insert 36 is additionally provided with a pin 26, protruding from its centre, the pin is mounted slideably in a slot between the guides 25 of the protrusion 14 of the unlocking module 2 and then goes through the hole 27 of the slide. This pin prevents the slide from being moved when the pin is not pressed by a mobile phone. This blocking arrangements protects the power plug 9 from being broken in case of an attempt to insert a mobile phone into the holder when slide 3 is moved down. The plate 19 of the slide 3 is also provided with two protruding corners 28, which locate the mobile phone in the slide.

In the lower part of the plate 19 there is a protrusion 29 with a guide 30 for the casing 39 of the power plug 9. Within this protrusion the edges of the plate 19 form a vertical wall 37 with a hole 38, through which the power plug 9 crosses (Fig. 4).

The casing 39 of the power plug 9 is made of a material providing electric insulation, favourably plastic, and both - the lower and the upper pin 34 are mounted slideably in two guides. The lower pin 34 is guided concurrently along the longitudinal guide 30 of the flat protrusion 29, which is perpendicular to the A-A axis of the holder and along the first guide 8 of the base 1, inclined at an acute angle to the A-A axis of the holder. The other pin 34 is guided along a guide in the protrusion 31 in the cover 4, not depicted in the drawing and corresponding to and inclined at the same angle to the A-A axis as the guide 8 is. The motion of the slide along the holder axis results in a perpendicular motion of the casing 39 of the power plug 9, which makes the power plug 9 protrude from the hole 38 in the vertical wall 37 of the slide 3 and enter into the socket of the mobile phone T.

The shape of the lower part of the cover 4 of the holder is the same as the shape of the cavity 20 of the slide 3, and at the inside of the cover 4 there are guides for the slide 3, not depicted in the drawing.

The mobile phone holder, according to the invention, operates as follows:

In a released position, as shown in the Fig. 1 and the Fig. 7, the slide 3 of the holder is in its upper location. When the lower part of the mobile phone is inserted into the cavity 20 and the upper part of the mobile phone is pressed down to the plate 19 of the slide, the phone pushes the pin 26 thus unblocking the holder. In the same time, the catch 22 blocks the mobile phone in the slide 3. Next, the slide 3 with a mobile phone in it moves downwards, which results in that the guides 25 of the unlocking module 2 press the protrusions 24 of the catch 22, which is blocked in the lower position, locking the mobile phone. At the same time, during the motion, the guides 8 and the guide 30 have an effect on the pin 34 of the casing 39 and make the power plug 9 protrude and enter the power socket on the lateral side of the mobile phone T.

Analogously, similar guides may make the signal plug protrude and enter the signal socket on the lateral side of the mobile phone.

If a mobile phone is provided with sockets both on the lateral and the bottom side, and the holder is provided with such plugs in the lower part of the base 1, moving the phone in a slide 3 downwards results in that these plugs in the base 1 enter into the socket of the phone.

In order to release and remove a mobile phone from the holder it is necessary to press both button 15 of the unlocking module 2 towards the A-A axis of the holder. This results in a corresponding move of the teeth 18 and a release of the catches on the bottom side of the plate 19 of the slide 3. As a result of a release of the slide 3, its return springs 32 make the slide 3 moves automatically with the phone in it upwards to the uppermost as-released position. Concurrently, while the slide 3 is moving upwards, the inclined guide 8 and the guide 30 have an effect on the pins 34 of the casing 39 and the power plug 9 and, if applicable, other signal plugs, slides out from the corresponding sockets on the lateral side of the phone. At the end phase of this move and when the slide 3 is in its uppermost position, the catch 22 is released, thus enabling the phone to be removed from the holder. Removing the phone from the holder results in releasing the pin 26, which blocks the holder.

The embodiment of the holder presented here enables safe mounting a mobile phone in it, without a risk of the lateral power plug 9 or, if applicable, other lateral signal plugs, being broken.

The Fig. 8 shows other embodiment of the holder, according to the invention, where the holder is provided with an additional antenna plug 33, mounted elastically in the plate 19 of the slide 3. This plug automatically enters the corresponding antenna socket located on the rear side of a mobile phone.

## Claims

1. A mobile phone holder with lateral connections, especially for a vehicle, that is provided with a base (**1**) and a cover (**4**) and a slide (**3**), which is mounted slidably in the base (**1**) and into which a mobile phone is insertable, the holder is provided with an unlocking module (**2**) with lateral buttons (**15**), which are connected to an eccentric wheel (**17**) coupling the lateral buttons (**15**), and which, when pressed, unlock the mobile phone, **characterized in that** its slide (**3**) is provided with a power plug (**9**), mounted slidably in it, the slide (**3**) having a casing (**39**) and a first and second pins (**34**),a first guide (**8**) is provided in the base (**1**) and guiding the first pin, and a second guide is provided in the cover (**4**) and guiding the second pin, the first and second guides being inclined towards the longitudinal axis of the holder, the first pin being further guided along a third guide (**30**) of a flat protrusion (**29**) of the holder, the protrusion being perpendicular to the holder longitudinal axis, thus making the power plug (**9**) move perpendicular to the longitudinal axis of the holder.

2. The holder according to the Claim 1, **characterized in that** the casing (**39**) of the power plug (**9**) is also a casing of signal plugs, which are adapted to engage with corresponding sockets in the lateral side of the mobile phone.

3. The holder according to the Claim 1, **characterized in that** the slide (**3**) is provided with an insert (**36**), which is mounted in the slide (**3**) and slidably in the longitudinal direction of the holder, the insert (**36**) having supports with a catch (**22**) rotatably mounted thereto, is the catch (**22**) being provided with a spring (**23**) and being adapted to hold the upper edge of a mobile phone.

4. The holder according to the Claim 3, **characterized in that** its catch (**22**) is provided with blocking protrusions (**24**), which are adapted to engage with guides (**25**) in the protrusion (**14**) of the body (**11**) of the unlocking module (**2**) and to block the catch (**22**) when the slide (**3**) is in its lowest position.

5. The holder according to the Claim 4, **characterized in that** the protrusion (**14**) of the body (**11**) of the unlocking module (**2**) is provided with a slot (**35**), in which a guide pin (**26**), mounted slidably in the hole (**27**) of the plate (**19**) of the slide (**3**), is guided perpendicularly to the surface of the plate (**19**) and is adapted to release the protrusion (**14**) of the body (**11**) of the unlocking module (**2**), when the phone is inserted, thus allowing the motion of the slide (**3**) to its lowest position.

6. The holder according to the Claim 1, **characterized in that** its unlocking module (**2**) has a body (**11**), which expanded arms (**12**) are also the guides for the slide (**3**).

7. The holder according to the Claim 1, **characterized in that** its cover (**4**) is provided in its lateral part with a guide (**31**) inclined to the axis of the holder analogously to the guide (**8**) of the base (**1**) and adapted to guide the pin (**34**) of the power plug (**9**) casing (**39**).

8. The holder according to the Claim 1, **characterized in that** the slide (**3**) is provided on its plate (**19**) with an antenna plug (**33**).

## Patentansprüche

1. Mobiltelefonhalterung mit seitlichen Anschlüssen, insbesondere für Fahrzeuge; Halterung ausgerüstet mit einem Grundkörper (**1**), Deckel (**4**) und Schieber (**3**), der im Grundkörper (**1**) verschiebbar gelagert ist und in welchem das Mobiltelefon befestigt wird, wobei die Halterung auch mit einer Entriegelungsvorrichtung (**2**) mit seitlichen Tasten (**15**) ausgerüstet ist. Diese Tasten sind mit einem Exzenterrad (**17**) verbunden und entriegeln nach der Betätigung das Mobiltelefon, **gekennzeichnet dadurch, dass** der Schieber (**3**) über einen verschiebbar integrierten Versorgungsstecker (**9**) und ein Gehäuse (**39**) sowie die ersten und zweiten Zapfen (**34**) verfügt; im Grundkörper (**1**) befindet sich die erste Führung (**8**), die den ersten Zapfen führt und im Deckel (**4**) befindet sich die zweite Führung für den zweiten Zapfen, wobei die erste und die zweite Führung zur Längsachse des Halterung geneigt sind und der erste Zapfen auch in der dritten Führung (**30**) des flachen Vorsprungs (**29**) der Halterung geführt wird, wobei dieser flache Vorsprung zur Längsachse der Halterung senkrecht ist und den Versorgungsstecker (**9**) in eine zur Längsachse der Halterung senkrechte Richtung bewegt.

2. Halterung nach Anspruch 1, **gekennzeichnet dadurch, dass** das Gehäuse (**39**) des Versorgungssteckers (**9**) zugleich ein Gehäuse für die Signalstecker bildet, welche zum Anschluss an die entsprechenden Buchsen der Seitenwand des Mobiltelefons vorgesehen sind.

3. Halterung nach Anspruch 1, **gekennzeichnet dadurch, dass** der Schieber (**3**) mit einer Einlage (**36**) ausgerüstet ist, die im Schieber (**3**) in Längsrichtung der Halterung verschiebbar gelagert ist, wobei die Einlage (**36**) mit Stützelementen ausgerüstet ist, welche über einen drehbar gelagerten Haken (**22**) mit einer Feder (**23**) verfügen, der zur Befestigung der oberen Kante des Mobiltelefons vorgesehen ist.

4. Halterung nach Anspruch 3, **gekennzeichnet dadurch, dass** der Haken (**22**) über Verriegelungsvorsprünge (**24**) verfügt, die zum Einhaken an Führungen (**25**) im Vorsprung (**14**) des Körpers (**11**) der Entriegelungsvorrichtung (**2**) und zur Verriegelung dieses Hakens (**22**) in der unteren Stellung des Schiebers (**3**) vorgesehen sind.

5. Halterung nach Anspruch 4, **gekennzeichnet dadurch, dass** der Vorsprung (**14**) des Körpers (**11**) der Entriegelungsvorrichtung (**2**) über einen Schlitz (**35**) verfügt, in welchem der Führungszapfen (**26**) verschoben wird, der im Loch (**27**) der Platte (**19**) des Schiebers (**3**) senkrecht zur Oberfläche dieser Platte (**19**) verschiebbar gelagert ist und den Vorsprung (**14**) des Körpers (**11**) der Entriegelungsvorrichtung (**2**) nach Hineinpressen des Telefons entriegelt und die Verschiebung des Schiebers (**3**) in seine untere Stellung ermöglicht.

6. Halterung nach Anspruch 1, **gekennzeichnet dadurch, dass** die Entriegelungsvorrichtung (**2**) über einen Körper (**11**) verfügt, dessen Arme (**12**) zugleich eine Führung für den Schieber (**3**) bilden.

7. Halterung nach Anspruch 1, **gekennzeichnet dadurch, dass** ihr Deckel (**4**) in seinem seitlichen Teil über eine Führung (**31**) verfügt, die zur Halterungsachse geneigt ist - genauso, wie die Führung (**8**) zum Grundkörper (**1**) - und zur Führung des Zapfens (**34**) der Gehäuses (**39**) des Versorgungssteckers (**9**) vorgesehen ist.

8. Halterung nach Anspruch 1 (**3**), **gekennzeichnet dadurch, dass** der Schieber (**3**) auf seiner Platte (**19**) mit einem Antennenstecker ausgerüstet ist (**33**).

## Revendications

1. Le support pour téléphone portable avec des joints latéraux, surtout pour les véhicules, est équipé d'une base (1), d'un couvercle (4) et d'un poussoir (3) qui est fixé d'une manière coulissante dans la base (1) et dans lequel est fixé le téléphone portable, sachant que la poignée est aussi équipée d'un système libérant (2) avec des boutons latéraux (15) reliés avec une roue excentrique (17) qui, après les avoir appuyé, libèrent le téléphone, **caractérisé en ce que** le son poussoir (3) est équipé d'une fiche d'alimentation (9) y fixée d'une manière coulissante et d'un boîtier (39) et des pivots (34), aussi il y a une première glissière (8), à la base (1), tenant le premier pivot et dans le couvercle (4) se trouve la deuxième glissière tenant le deuxième pivot où les deux glissières sont inclinées vers l'axe de la poignée, par contre le premier pivot est tenu dans la troisième glissière (30) du débord plat (29) de la poignée, sachant que ce débord soit perpendiculaire à l'axe de la poignée et donne à cette fiche d'alimentation (9) un mouvement perpendiculaire par rapport à l'axe de la poignée.

2. La poignée selon la revendication 1, **caractérisé en ce que** le boîtier (39) de la fiche d'alimentation (9) constitue de même un boîtier pour les fiches de signal adaptées à la coopération avec des prises sur le mur côté du téléphone portable.

3. La poignée selon la revendication 1, **caractérisé en ce que** le poussoir (3) est équipé d'un insert (36) qui est fixé dans le poussoir (3) d'une manière coulissante vers la poignée, sachant que l'insert (36) possède des supports avec un crochet (22), y fixé d'une manière rotative, qui est équipé d'un ressort (23) et qui est adapté pour soutenir le borde supérieur du téléphone portable.

4. La poignée selon la revendication 3, **caractérisé en ce que** le crochet (22) est équipé des débords bloquants (24) qui sont adaptés pour accrocher avec les glissières (25) dans un saillant (14) du corps (11) d'un système libérant (2) et pour bloquer ce crochet (22) dans une position inférieure du poussoir (3).

5. La poignée selon la revendication 4, **caractérisé en ce que** le saillant (14) du corps (11) d'un système libérant (2) possède une fente (35) dans laquelle se déplace le pivot (26) fixé d'une manière coulissante dans un orifice (27) de la plaque (19) du poussoir, perpendiculairement à la surface de cette plaque (19) et adapté pour libérer le saillant (14) du corps (11) du système libérant (2), après avoir insérer le téléphone, donnant une possibilité d'un déplacement du poussoir (3) dans sa position inférieure.

6. La poignée selon la revendication 1, **caractérisé en ce que** son système libérant (2) a son corps (11) dont les bras réfléchis (12) sont aussi des glissières pour le poussoir (3).

7. La poignée selon la revendication 1, **caractérisé en ce que** son couvercle (4) est équipé, dans sa partie côté, d'une glissière (31) inclinée à l'axe de poignée, analogiquement comme la glissière (8) de la base (1) et adaptée à guider le pivot (34) du boîtier (39) de la prise d'alimentation (9).

8. La poignée selon la revendication 1, **caractérisé en ce que** le poussoir (3) est équipé d'un connecteur d'antenne (33), sur sa plaque (19).
